# EUROPEAN PATENT SPECIFICATION

(11) **EP 4 016 669 B1**
(45) Date of publication and mention of the grant of the patent: **10.09.2025**
(21) Application number: 21847095.3
(22) Date of filing: 21.07.2021
(51) Int. Cl.: H01M 4/13, H01M 4/134, H01M 4/62, H01M 10/42, H01M 4/04, H01M 10/052, H01M 4/139, H01M 4/38, H01M 4/02, H01M 4/1395, H01M 4/36

(54) **NEGATIVE ELECTRODE FOR LITHIUM SECONDARY BATTERY HAVING LITHIATION RETARDATION LAYER INTRODUCED THEREIN, AND METHOD FOR MANUFACTURING SAME**
NEGATIVE ELEKTRODE FÜR LITHIUM-SEKUNDÄRBATTERIE MIT EINGEFÜHRTER LITHIERUNGSVERZÖGERUNGSSCHICHT UND VERFAHREN ZUM HERSTELLEN DERSELBEN
ÉLECTRODE NÉGATIVE POUR BATTERIE SECONDAIRE AU LITHIUM AYANT UNE COUCHE DE RETARD DE LITHIATION INTRODUITE DANS CELLE-CI, ET SON PROCÉDÉ DE FABRICATION

(30) Priority: 21.07.2020 KR 20200090052; 20.07.2021 KR 20210094560
(43) Date of publication of application: 22.06.2022
(73) Proprietor: LG ENERGY SOLUTION, LTD., Seoul 07335 (KR)
(72) Inventor: YOUN, Suk Il, Daejeon 34122 (KR); HONG, Yeon Suk, Daejeon 34122 (KR); JUNG, Byoung Hyo, Daejeon 34122 (KR); CHOI, Jung Hun, Daejeon 34122 (KR)
(74) Representative: Hoffmann Eitle
(86) International application number: PCT/KR2021/009374
(87) International publication number: WO 2022/019630

(56) References cited:
- WO-A1-2020/145753
- CN-A- 110 828 778
- KR-A- 20010 062 467
- KR-A- 20120 032 051
- KR-A- 20190 007 398
- KR-A- 20190 091 220
- KR-B1- 101 984 727
- US-A1- 2007 190 416
- US-A1- 2019 013 516
- US-A1- 2020 227 753

## Description

### [Technical Field]

This application claims the benefit of priority based on Korean Patent Application No. 10-2020-0090052 filed on July 21, 2020 and Korean Patent Application No. 10-2021-0094560 filed on July 20, 2021.

The present invention relates to a negative electrode for a lithium secondary battery, and a method of manufacturing the negative electrode.

### [Background Art]

As the price of energy sources increases due to depletion of fossil fuels and the interest in environmental pollution increases, the demand for environmentally friendly alternative energy sources becomes an indispensable factor for future life. Especially, as technology development and demand for mobile devices are increasing, demand for secondary batteries as energy sources is rapidly increasing.

Typically, in terms of the shape of the battery, there is a high demand for a prismatic secondary battery and a pouch-type secondary battery that can be applied to products such as mobile phones with a small thickness. In terms of materials, there is a high demand for lithium secondary batteries such as lithium ion batteries and lithium ion polymer batteries having high energy density, discharge voltage, and output stability.

Generally, in order to prepare a secondary battery, first, a positive electrode and a negative electrode are formed by applying an electrode mixture containing an electrode active material to a surface of a current collector, then a separate is interposed therebetween to thereby make an electrode assembly, which is then mounted in a cylindrical or rectangular metal can or inside a pouch-type case of an aluminum laminate sheet, and a liquid electrolyte is injected or impregnated into the electrode assembly or a solid electrolyte is used to prepare a secondary battery.

In general, the negative electrode of a lithium secondary battery uses a carbon material such as graphite, but the theoretical capacity density of carbon is 372 mAh/g (833 mAh/cm³). Therefore, in order to improve the energy density of the negative electrode, silicon (Si), tin (Sn), oxides and alloys thereof which are alloyed with lithium are considered as negative electrode materials. Among them, silicon-containing materials have attracted attention due to their low cost and high capacity (4200 mAh/g).

Although such silicon-containing material shows a high capacity, a problem arises in that the initial irreversible capacity is large. During charging and discharging of the lithium secondary battery, lithium discharged from the positive electrode is inserted into the negative electrode at the time of charging, and is discharged from the negative electrode at the time of discharging and returns to the positive electrode. In the case of the silicon negative electrode active material, a large amount of lithium inserted into the negative electrode does not return to the positive electrode at the time of initial charging and thus the initial irreversible capacity becomes large. When the initial irreversible capacity increases, there occurs a problem that the battery capacity and the cycle are rapidly reduced.

As one of methods for solving the problems related to the initial irreversibility, prelithiation technologies for pre-inserting lithium into the negative electrode have been attempted. Among them, the lithium direct contact method is a method of directly laminating thin film lithium on the negative electrode layer, and after the cell assembly, the electrolyte is injected to move the lithium of the lithium layer to the negative electrode (diffusion) to increase the lithium content in the negative electrode, to thereby solve the problem of irreversible capacity reduction.

However, in the lithiation method of the above method, active material particles, which directly contact the lithium layer, are quickly lithiated, but active material particles at the current collector side are slowly lithiated because the distance between the active material particles and the lithium layer is large. The difference in such a lithium diffusion distance is particularly likely to generate side effects such as the desorption of the silicon-containing active material electrode.

Further, there is a time interval until electrolyte solution is injected after the cell assembly or until initial charge and discharge are performed. Herein, before the injection of the electrolyte, lithium of the lithium layer attached to the negative electrode may be unevenly moved into the negative electrode (solid-diffusion), thereby increasing resistance, or lithium may be diffused into the air, causing a problem of loss of lithium amount. Therefore, it is necessary to evenly perform lithiation in the thickness direction of the negative electrode.

On the other hand, Korean Patent Publication No. 10-2018-0057513 discloses a technology of interposing an anti-lithiation layer between an electrode layer and a lithium layer as an issue of fire or explosion is raised by occurrence of lithiation due to direct contact between the material of the electrode layer and the lithium layer in case of (pre) lithiation by the lithium direct contact method. However, the proposed technology was appropriate for forming a lithium layer by lamination, but it was inappropriate for forming a lithium layer by a thermal evaporation method because the prelithiation preventing layer did not have sufficient heat resistance. Further, the prelithiation preventing layer continues to remain in the negative electrode, which can act as a resistance.

US 2020/0227753 A1 describes electrode including a lithium diffusion rate-controlling layer and a lithium layer stacked successively on the surface thereof, and a method for manufacturing the same are disclosed. The electrode includes: a current collector; an electrode active material layer formed on the surface of the current collector; a lithium diffusion rate-controlling layer formed on the surface of the electrode active material layer; and a lithium layer containing a lithium metal ingredient and formed on the surface of the lithium diffusion rate-controlling layer.

WO 2020/145753 A1 describes lithium electrode and a lithium secondary battery comprising same and, more specifically, a lithium electrode in which an acrylic polymer layer is formed on a lithium metal layer, the acrylic polymer layer performing a function as a protective layer for the lithium metal layer and a function as a release layer in the manufacturing process of the lithium electrode, wherein in the lithium secondary battery comprising the lithium electrode, the acrylic polymer layer shows an effect of not acting as an resistor in the driving of the battery. Therefore, there is a need for a lithiation technology for allowing lithium to be evenly diffused in the negative electrode active material layer without an increase in resistance through slow lithiation in forming a lithium layer by a thermal evaporation method.

### [Prior art literature]

### [Patent Document]

(Patent Document 1) Korea Patent No. 10-2018-005713

### [Disclosure]

### [Technical Problem]

The present invention has been devised to solve the above problems, and an object of the present invention is to provide a negative electrode for allowing lithium to be evenly diffused in a negative electrode active material layer without an increase in resistance through slow lithiation, and a method of manufacturing the negative electrode.

### [Technical Solution]

A negative electrode for a lithium secondary battery according to the present invention includes: a negative electrode current collector; a negative electrode active material layer on at least one surface of the negative electrode current collector; a lithiation retardation layer on the negative electrode active material layer; and a lithium layer formed on the lithiation retardation layer, wherein in the lithium layer, an average surface roughness of an opposite surface of a surface contacting the lithiation retardation layer is 0.4 *µ*m or less;
wherein the lithiation retardation layer comprises a polymer having at least one of an acrylate repeating unit and a carbonate repeating unit,
wherein a negative electrode active material present in the negative electrode active material layer is a silicon-based negative electrode active material, and
wherein the lithiation retardation layer is soluble in a carbonate-containing electrolyte solution;
wherein the surface roughness denotes the arithmetic average roughness Ra, determined as set out in Experimental Example 4 of the specification.

In a specific example, the lithiation retardation layer includes a polymer having a carbonate repeating unit. Herein, in the lithium layer, an average surface roughness of the opposite surface of the surface contacting the lithiation retardation layer is in a range of 0.05 *µ*m to 0.35 *µ*m.

In an embodiment of the present invention, an average thickness of the lithiation retardation layer is in a range of 0.1 *µ*m to 5 *µ*m.

In an embodiment of the present invention, an average thickness of the lithium layer is in a range of 0.5 *µ*m to 30 *µ*m.

A method of manufacturing a negative electrode for a lithium secondary battery according to the present invention includes: immersing a negative electrode precursor in a solution containing an amorphous polymer, wherein the negative electrode precursor comprises a negative electrode current collector, a negative electrode active material layer on at least one surface of the negative electrode current collector, and a lithiation retardation layer on the negative electrode active material layer, wherein a negative electrode active material present in a negative electrode active material layer is a silicon-containing negative electrode active material; and forming a lithium layer by depositing lithium on the lithiation retardation layer, wherein during the forming of the lithiation retardation layer, the amorphous polymer comprises at least one of an acrylate repeating unit and a carbonate repeating unit as its repeating unit, and wherein the lithiation retardation layer is soluble in a carbonate-containing electrolyte solution.

In an embodiment of the present invention, the forming of the lithium layer is performed by thermal evaporation.

### [Advantageous Effects]

According to a negative electrode for a lithium secondary battery of the present invention, as a lithiation retardation layer containing polymers, which can be dissolved in an electrolyte solution, is introduced between a negative electrode active material layer and a lithium layer, the lithiation retardation layer delays the diffusion rate of lithium, hence the lithiation of the negative electrode active material layer is slowly performed. As such, as lithiation is uniformly performed in the thickness direction of the negative electrode active material layer, excellent compensation effects of irreversible capacity are exhibited, and side effects such as desorption of the negative electrode active material by non-uniform lithiation can be prevented.

Further, since the lithiation retardation layer of the negative electrode for a lithium secondary battery according to the present invention has an excellent heat resistance, it is possible to stably form a lithiation retardation layer at the time of forming a lithiation layer by thermal evaporation.

### [Brief Description of the Drawings]

FIG. 1 is a cross-sectional view of a negative electrode according to an embodiment of the present invention.
FIG. 2 is a flowchart of a method of manufacturing a negative electrode according to an embodiment of the present invention.

### [Detailed Description of the Preferred Embodiments]

In this application, it should be understood that terms such as "include" or "have" are intended to indicate that there is a feature, number, step, operation, component, part, or a combination thereof described in the specification, and they do not exclude in advance the possibility of the presence or addition of one or more other features, numbers, steps, operations, components, parts or combinations thereof. Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail with reference to the drawings.

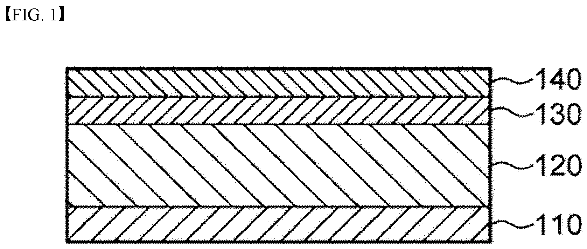

FIG. 1 is a cross-sectional view of a negative electrode 100 according to an embodiment of the present invention, specifically showing a negative electrode structure before lithiation. Referring to FIG. 1, the negative electrode 100 has a structure which is formed by sequential lamination of a current collector 110; a negative electrode active material layer 120 formed on the current collector 110; a lithiation retardation layer 130 formed on the negative electrode active material layer 120; and a lithium layer 140 formed on the lithiation retardation layer 130.

Specifically, in the lithium layer 140, the surface roughness of the opposite surface of the surface contacting the lithiation retardation layer 130 is 0.4 *µ*m or less, more specifically in the range of 0.05 *µ*m to 0.4 *µ*m, the range of 0.1 *µ*m to 0.4 *µ*m, or the range of 0.15 *µ*m to 0.2 *µ*m.

The negative electrode of the present invention lowers the diffusion rate of lithium from the lithium layer by introduction of a lithiation retardation layer 130 between the negative electrode active material layer 120 and the lithium layer 140, thereby helping lithium to be evenly diffused in the negative electrode active material layer. The lithiation retardation layer of the present invention functions as a lithiation retardation layer for delaying rapid diffusion of lithium during lithiation according to impregnation of the electrolyte solution. Hence, since lithiation of negative electrode active materials is slowly performed regardless of the distance with the lithium layer, the risk of explosion by a sudden reaction between negative electrode active materials and lithium particles is lowered, and desorption of the negative electrode by the uneven lithiation can be prevented.

Further, after the entire or a large amount of the lithium of the lithium layer is inserted into the negative electrode active material layer by lithiation, the lithiation retardation layer may be dissolved in the electrolyte solution, and does not remain in the negative electrode, and thus this does not act as the resistance of the battery.

The present invention is characterized in that the lithiation retardation layer is made of a material which can be dissolved in an electrolyte solution so that the lithiation retardation layer does not act as a resistance after completion of the lithiation.

In the present invention, the lithiation retardation layer, as the amorphous polymer, contains at least one of an acrylate repeating unit and a carbonate repeating unit as its repeating unit. The polymer having the above characteristics is soluble in conventional electrolyte solutions of the lithium secondary battery. Specific examples of such polymers may include polymethyl methacrylate (PMMA)- containing or polycarbonate (PC)-containing polymers. These polymers are known to be well dissolved in a carbonate-containing electrolyte solution commonly used as an electrolytic solution.

Particularly, the lithiation retardation layer is formed of polymers including carbonate repeating units, thereby implementing high heat resistance and excellent surface uniformity at high temperatures.

Meanwhile, in the present invention in which a lithium layer is formed by a thermal evaporation scheme on a negative electrode, the lithiation retardation layer has a function such as a substrate, and thus it is preferable that the lithiation retardation layer of the present invention has heat resistance.

According to the thermal evaporation method for forming a lithium layer of the present invention, a lithium ingot is heated at 500°C to 700°C, so that the evaporated lithium is deposited on the substrate. Herein, since the temperature of the evaporated lithium is high, the substrate should be able to sufficiently endure the heat of the evaporated lithium. Namely, in the case that the heat resistance of the lithiation retardation layer functioning as the substrate is low, the polymer chain comes to have fluidity, and the lithium deposition cannot be stably performed. Hence, the lithiation retardation layer should have a heat resistance of a certain level or higher.

In this aspect, it is preferable that the Tg of the polymer material constituting the lithiation retardation layer of the present invention is 120 °C or higher. Therefore, it is more preferable to select a polymer having Tg of 120 °C or higher among the polymers including acrylate repeating units or carbonate repeating units. For example, polymethyl methacrylate polymer may further include one or more repeating units selected from the group consisting of aromatic vinyl-based repeating units; imide-based repeating units; vinyl cyanide-based repeating units; and 3-membered to 6-membered heterocyclic repeating units substituted with at least one carbonyl group.

For example, the polymethyl methacrylate having a functional group of a phenyl maleimide is particularly preferable as a material of the lithiation retardation layer because its Tg is 120°C or higher. In addition, since the Tg of the polycarbonate polymer is generally 120°C or higher, the polycarbonate polymer is particularly preferable as the material of the lithiation retardation layer of the present invention.

For example, when lithium is heated and supplied to a temperature of 600°C or higher, it is advantageous to apply a polymer containing carbonate repeating units as the lithiation retardation layer. Herein, in the lithium layer, the surface roughness (Ra) of the opposite surface of the surface contacting the lithiation retardation layer may be controlled to be in a range of 0.05 *µ*m to 0.35 *µ*m. More specifically, the surface roughness (Ra) of the lithium layer may be in the range of 0.05 *µ*m to 0.3 *µ*m, the range of 0.1 *µ*m to 0.3 *µ*m, or the range of 0.15 *µ*m to 0.2 *µ*m.

In a specific embodiment of the present invention, the thickness of the lithiation retardation layer is in the range of 0.1 *µ*m to 5 *µ*m, specifically in the range of 0.3 *µ*m to 3 *µ*m, and more specifically in the range of 0.5 *µ*m to 2 *µ*m. If the thickness of the lithiation retardation layer is too large, it may take a long time to be dissolved in the electrolyte solution, and the viscosity of the electrolyte solution can be increased to thereby reduce the ion conductivity, and it is difficult to coat the lithiation retarding layer too thin in terms of the process.

Hereinafter, the lithium layer will be described in detail.

The lithium layer is used as a source for lithiating the negative electrode active material included in the negative electrode active material layer, and after a certain period of time from electrolyte injection, a certain amount of lithium layer participates in the prelithiation and moves into the negative electrode active material layer. Even after prelithiation is completed to some extent, the residual amount may exist on the surface of the negative electrode. The lithium layer contains lithium metal.

In a specific embodiment of the present invention, the thickness of the lithium layer is in the range of 0.5 *µ*m to 30 *µ*m, specifically in the range of 2 *µ*m to 20 *µ*m. The thickness of the lithium layer can be adjusted to an appropriate range, according to the material of the negative electrode, the irreversible capacity to be compensated, etc., and as in the example of the present invention, in the case of the negative electrode of 100% pure silicon (Si), the specific thickness is in the range of 3 *µ*m to 20 *µ*m, and more specifically in the range of 5 *µ*m to 15 *µ*m or the range of 6 *µ*m to 14 *µ*m.

Hereinafter, the current collector and the negative electrode active material layer constituting the negative electrode of the present invention will be described in detail.

The current collector is generally made of a thickness of 3 µm to 500 µm. The current collector is not particularly limited as long as it has high conductivity without causing a chemical change in the battery. For example, the current collector may be made of a metal such as stainless steel, aluminum, nickel, titanium, sintered carbon, cooper, or aluminum or stainless steel of which the surface is treated with carbon, nickel, titanium, or the like.

The negative electrode active material contains a silicon- containing negative electrode active material, and the silicon- containing negative electrode active material may be in the form of particles or powder containing the particles. The silicon- containing negative electrode active material may include, or one or more substances selected from the group consisting of silicon (Si), silicon alloy (Si-alloy), silicon oxide (SiO_{X}) and silicon-carbon composite. The carbon material in the silicon-carbon composite may be bonded, attached, or coated on the surface of silicon or silicon oxide particles. The carbon material may include at least one selected from the group consisting of crystalline carbon, natural graphite, artificial graphite, kish graphite, graphitized carbon fiber, graphitized mesocarbon microbeads, and amorphous carbon. In addition, the graphite may include those obtained by graphitizing one or more selected from the group consisting of soft carbon, hard carbon, pyrolytic carbon, mesophase pitch based carbon fiber, meso-carbon microbeads, mesophase pitches, petroleum or coal tar pitch derived cokes and activated carbon.

The negative electrode active material layer of the present invention may further include a conductive material and a binder in the negative electrode active material layer.

The binder is added in an amount of 1 to 30% by weight, on the basis of the total weight of the electrode mixture, as a component that assists in bonding between the active material and the conductive material and bonding to the current collector. The high molecular weight polyacrylonitrile-acrylic acid copolymer may be used as such a binder, but is not limited thereto. Other examples include polyvinylidene fluoride, polyvinyl alcohol, carboxymethyl cellulose, starch, hydroxypropyl cellulose, recycled cellulose, polyvinylpyrrolidone, tetrafluoroethylene, polyethylene, polypropylene, ethylene-propylene-diene, sulfonated EDPM, styrene rubber, butylene rubber, fluorine rubber, etc. which are various copolymers.

The conductive material is usually added in an amount of 1 to 30% by weight based on the total weight of the mixture including the negative electrode active material. Such a conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and summer black; conductive fibers such as carbon fiber and metal fiber; metal powders such as carbon fluoride, aluminum and nickel powder; conductive whiskey such as zinc oxide and potassium titanate; conductive metal oxides such as titanium oxide; and conductive materials such as polyphenylene derivatives and the like, but the present invention is not limited to these examples.

Hereinafter, a method of manufacturing a negative electrode for a lithium secondary battery of the present invention will be described.

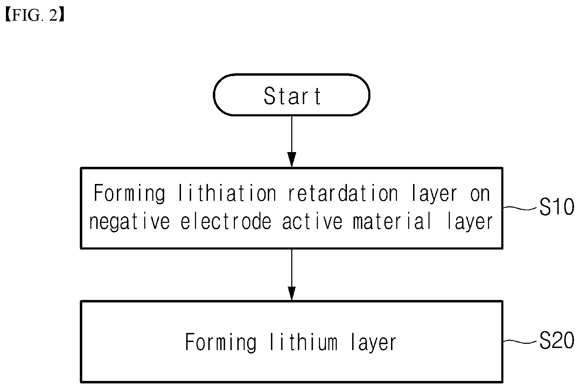

FIG. 2 is a flowchart of a method of manufacturing a negative electrode according to an embodiment of the present invention. Referring to FIG. 2, a method of manufacturing a negative electrode for a lithium secondary battery according to the present invention includes immersing a negative electrode in a solution containing an amorphous polymer (S10), and forming a lithium layer by depositing lithium on the lithiation retardation layer (S20).

The step of forming the lithiation retardation layer is a step of forming a lithiation retardation layer by coating an amorphous polymer material of a predetermined thickness on the negative electrode active material layer. The coating method is not particularly limited as long as the polymer material can be coated on the negative electrode active material layer. The amorphous polymer material constituting the lithiation retardation layer is a polymer containing an acrylate repeating unit or a carbonate repeating unit. Since the description thereof has been made above, the more details about this are omitted here.

In one embodiment of the present invention, a dip coating method, which enables an easy coating, was selected. In the dip coating method of the present invention, first, a polymer material constituting a lithiation retardation layer is dissolved in a solvent, to thereby prepare a solution. Thereafter, a negative electrode is immersed in the solution and is then taken out, to thereby coat the lithiation retardation layer on the negative electrode active material layer.

The step (S20) forming the lithium layer is a step of forming a lithium layer, which becomes a lithium source of lithiation, on the lithiation retardation layer. In the step of forming the lithium layer of the present invention, a lithium film, where a lithium layer is formed on a release film, is laminated on a negative electrode active material layer, and is then laminated to thereby the lithium metal of the lithium film to be transferred onto the negative electrode active material layer, or a lithium layer may be formed on the negative electrode active material layer by a thermal evaporation scheme.

Hereinafter, a lithiation process will be described in detail.

The lithiation of the negative electrode proceeds during electrolyte injection and/or initial charge/discharge step after fabrication of the battery, and at least a part of the negative electrode active material included in the negative electrode active material layer is lithiated. The battery includes an electrode assembly having a negative electrode, a positive electrode, and a separator interposed between the negative electrode and the positive electrode, and the electrode assembly is inserted into a suitable exterior material and the electrolyte may be injected and sealed.

Lithiation may proceed by injecting the electrolyte. In other words, when the electrolyte is injected, the electrode assembly including components such as an electrode is impregnated in the electrolyte. At this time, as the lithiation retardation layer of the present invention is slowly dissolved, lithium of the lithium layer may be slowly diffused into the negative electrode active material layer.

After the electrolyte injection, the battery is activated by first applying a current to perform initial charge/discharge (formation). The activation process may be performed while a predetermined pressure is applied to the battery.

A negative electrode active material contained in a negative electrode active material layer, particularly, the above-mentioned silicon- containing negative electrode active material, may be combined with lithium by such a lithiation, to thereby form an alloy. In addition, a part of lithium may be inserted into the crystal structure of the negative electrode active material.

Since in accordance with the present inventino the lithiation retardation layer is interposed between the negative electrode active material layer and the lithium layer, diffusion of lithium is prevented by the lithiation retardation layer in the state before the injection of the electrolyte, and almost no lithiation proceeds. Almost all lithiation can be performed after the injection of the electrolyte into the electrode assembly and/or at the first charge and discharge step.

On the other hand, the first charge and discharge is preferably carried out in a state in which a predetermined pressure is applied to the battery in order to energize the lithiation retardation layer and the negative electrode. Thereafter, as long as lithium metal remains in the lithium layer, the lithiation may be continuously performed and may be affected, for example, may be accelerated by the charge/discharge of the battery.

Hereinafter, a lithium secondary battery including the negative electrode of the present invention will be described.

A lithium secondary battery includes a negative electrode, a positive electrode, a separator interposed between the negative electrode and the positive electrode, and an electrolyte, and the negative electrode having the above-described configuration features. The positive electrode is prepared by applying a mixture of a positive electrode active material, a conductive material and a binder on a positive electrode current collector, followed by drying. If necessary, a filler may be further added to the mixture. The positive electrode active material may be a layered compound such as lithium cobalt oxide (LiCoO₂), lithium nickel oxide (LiNiO₂), or a compound substituted with one or more transition metals; lithium manganese oxides such as Li₁₊ₓMn₂₋ₓO₄ (herein, x is between 0 and 0.33), LiMnO₃, LiMn₂O₃, and LiMnO₂; lithium copper oxide (Li₂CuO₂); vanadium oxides such as LiV₃O₈, LiV₃O₄, V₂O₅, and Cu₂V₂O₇; lithium nickel oxide expressed by LiNi₁₋ₓMₓO₂ (herein, M = Co, Mn, Al, Cu, Fe, Mg, B or Ga, and x = 0.01 to 0.3); a lithium manganese compound oxide expressed by LiMn₂₋ₓMₓO₂ (where M = Co, Ni, Fe, Cr, Zn or Ta 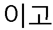 , x = 0.01 to 0.1) or Li₂Mn₃MO₈ (where M = Fe, Co, Ni, Cu or Zn); LiMn₂O₄ in which a part of Li is substituted with an alkaline earth metal ion; disulfide compounds; Fe₂(MoO₄)₃, etc., but not limited thereto.

In the case of the positive electrode, the conductive material, the current collector, and the binder may be understood by referring to the above description about the negative electrode.

The separator may be formed of an insulating thin film having high ion permeability and mechanical strength. The process diameter of the separator is generally between 0.01 *µ*m and 10 µm, the thickness may be between 5 µm and 300 µm. Examples of such a separator include olefin- containing polymers such as polypropylene which is chemically resistant and hydrophobic; a sheet or a nonwoven fabric made of glass fiber, polyethylene or the like. When a solid electrolyte such as a polymer is used as the electrolyte, the solid electrolyte may also serve as a separator.

The electrolyte solution contains an organic solvent and a predetermined amount of lithium salt, and examples of components of the organic solvent may include aprotic organic solvents such as N-methyl-2-pyrrolidinone, propylene carbonate, ethylene carbonate, butylene carbonate, dimethyl carbonate, diethyl carbonate, gamma-butylo lactone, 1,2-dimethoxy ethane, tetrahydroxy franc, 2-methyl tetrahydrofuran, dimethyl sulfoxide, 1,3-dioxolon, formamide, dimethylformamide, dioxorone, acetonitrile, nitromethane, methyl formate, methyl acetate, phosphate triester, trimethoxy methane, dioxon derivatives, sulfolane, methyl sulfolane, 1,3-dimethyl-2-imidazolidinone, propylene carbonate derivatives, tetrahydrofuran derivatives, ethers, methyl pyroionate and ethyl propionate.

The lithium salt is a substance that is soluble in the electrolyte. The examples of the lithium salt include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium 4-phenylborate, imide and the like.

The secondary battery may be manufactured by accommodating/sealing the electrode assembly, in which the positive electrode and the negative electrode are alternately stacked with a separator, in an exterior material such as a battery case together with the electrolyte. The manufacturing method of a secondary battery can use a conventional method without limitation.

According to another example, there is provided a battery module including the secondary battery as a unit cell and a battery pack including the same. Since the battery module and the battery pack include a secondary battery exhibiting excellent fast charging characteristics in high loading, the battery module and the battery pack may be used as a power source for an electric vehicle, a hybrid electric vehicle, a plug-in hybrid electric vehicle, and a power storage system.

### [Detailed Description of the Preferred Embodiments]

### Example 1

### <Preparation of negative electrode>

A negative electrode prepared by applying a negative electrode active material made of pure silicon (Si) on a copper current collector was prepared. After PMMA (polymethylmethacrylate, IH 830Grade: manufacturer LG Chemistry) is dissolved in a methylene chloride (manufacturer: Daejung Chemicals & Metals) at a concentration of 1%, the negative electrode was immersed in the solution, to thereby dip-coat the PMMA on the negative electrode active material layer. It was then dried at a room temperature for 10 minutes. At this time, the thickness of the PMMA coating layer was 1 *µ*m. Lithium was deposited on the PMMA coating layer of the negative electrode coated with the PMMA in a thermal evaporation scheme, to thereby form a lithium layer of 5 *µ*m. At this time, the evaporation device was EWK-060 of ULVAC Co., Ltd., the speed was set to 2.5m/min, the temperature of the lithium supply part was set to 500°C, and the temperature of the main roll was set to -25°C for the evaporation process.

### <Preparation of lithium secondary battery>

The negative electrode, where the lithium layer is formed, is cut into a size of a width of 34 mm and a length of 51 mm, and an electrode assembly, where a porous polyethylene separator is interposed between positive electrodes containing Li(Ni_{0.8}Co_{0.1}Mn_{0.1})O₂ as the positive electrode active material and the negative electrodes, is accommodated in a battery case. Thereafter, an electrolyte solution, to which 1M LiPF₆ has been added, is injected into a mixed solvent, which is obtained by mixing ethylene carbonate (EC) and ethyl methyl carbonate (EMC) at the ratio of 3: 7, to thereby manufacture a monocell.

### Example 2

A negative electrode prepared by applying a negative electrode active material made of pure silicon on a copper current collector was prepared. After Polycarbonate (DVD1080 grade: manufacturer - LG Chemistry) is dissolved in a methylene chloride (manufacturer: Daejung Chemicals and Metals) at a concentration of 1%, the negative electrode was immersed in the solution, to thereby dip-coat the polycarbonate on the negative electrode active material layer. It was then dried at a room temperature for 10 minutes. At this time, the thickness of the polycarbonate coating layer was 1 *µ*m. Lithium was deposited on the polycarbonate coating layer of the negative electrode coated with the polycarbonate in a thermal evaporation scheme, to thereby form a lithium layer of 5 *µ*m. At this time, the evaporation device was EWK-060 of ULVAC Co., Ltd., the speed was set to 2.5m/min, the temperature of the lithium supply part was set to 500°C, and the temperature of the main roll was set to -25°C for the evaporation process.

Thereafter, a monocell was prepared in the same manner as in Example 1.

### Example 3

The negative electrode was prepared in the same manner as in Example 2 except that the lithium supply speed was controlled to be 3.5 m/min, and the temperature of the lithium supply unit was controlled to be 650°C, during the thermal evaporation process.

Using the prepared negative electrode, a monocell was manufactured in the same manner as in Example 2.

### Comparative Example 1

A negative electrode prepared by applying a negative electrode active material made of pure silicon on a copper current collector was prepared. A lithium layer of 5 *µ*m was formed by depositing lithium on the negative electrode active material layer of the negative electrode in a thermal evaporation scheme in the same manner as the example 1.

Thereafter, a monocell was prepared in the same manner as in Example 1.

### Comparative Example 2

A negative electrode prepared by applying a negative electrode active material made of pure silicon on a copper current collector was prepared. Polyvinylidene fluoride-hexafluoropropylene (PVDF-HFP) was added to the acetone solvent to prepare a coating solution. The free standing film (1 *µ*m) was prepared on the substrate (PTFE) by a solution casting method with the coating solution. The film was dried in a vacuum oven at 80°C for 24 hours.

A negative electrode was prepared by sequentially laminating the film and a lithium foil (5 µm) on the negative electrode and rolling the laminate. Thereafter, a monocell was prepared in the same manner as in Example 1.

### Comparative Example 3

The negative electrode was prepared in the same manner as in Example 1 except that the lithium supply speed was controlled to be 3.5 m/min, and the temperature of the lithium supply unit was controlled to be 650°C, during the thermal evaporation process.

By using the prepared negative electrode, a monocell was manufactured in the same manner as in Example 1.

### Experimental Example 1: Observing cross-section of negative electrode with SEM

The cross section of each negative electrode was observed with SEM. As a result, it was confirmed that the lithiation depth of the negative electrode of examples 1 and 2 was large and uniform, but the lithiation was performed only up to 1/3 in the depth direction in the negative electrode of the comparative example 1. It is believed that the diffusion of lithium was slowly done by the lithiation retardation layer.

### Experimental Example 2: Measurement of initial capacity

The discharge capacity of each monocell prepared in the examples 1 and 2 and the comparative example 1 was measured. As a result, it was confirmed that the capacity of the monocell of examples 1 and 2 was greater than that of the monocell of the comparative example 1. This is believed that the negative electrode according to the present invention has completely compensated for the irreversible capacity by lithiation, but the monocell of Comparative Example 1 has not fully compensated for the irreversible capacity due to nonuniform lithiation.

### Experimental Example 3: Determining solubility of lithiation retardation layer

Each negative electrode, which was prepared in examples 1 and 2 and comparative example 2, was immersed in an electrolyte solution, which was obtained by adding 1M LiPF₆ to a mixed solvent, which is obtained by mixing ethylene carbonate (EC) and ethyl methyl carbonate (EMB) at the ratio of 3: 7, for 24 hours. Thereafter, the cross-section of each negative electrode was observed with SEM. As a result, the PMMA coating layer and the PC coating layer, which was the lithiation retardation layer, were not seen in the cross-sections of respective negative electrodes of examples 1 and 2. On the other hand, it was confirmed that the PVDF-HFP layer of Comparative Example 2 was not dissolved in the electrolyte solution and remained. It could be predicted from such experimental results that in the negative electrode including the lithiation retardation layer of the present invention, the lithiation retardation layer would not act as a resistance in the electrode by being dissolved in an electrolyte solution.

### Experimental Example 4: Measurement of surface roughness

The surface roughness of each negative electrode prepared in the examples 1 to 4 was measured. Specifically, the arithmetic average roughness (Ra) of the surface, where a lithium layer of each negative electrode was formed, was measured.

Specifically, the arithmetic average roughness (Ra) of the surface was measured in the chamber under the argon gas atmosphere and was measured by a 3D profiler, which is an optical contactless surface roughness meter. At this time, the magnification was 50 times as the sum of the viewing angle lens magnification and the object lens magnification, and the measurement area was 10 *µ*m x 10 *µ*m. The measured results are shown in Table 1 below.

**[Table 1]**

| Division | Lithiation retardation layer composition | Lithium supply unit temperature | Surface roughness (Ra) of lithium layer |
|---|---|---|---|
| Example 1 | PMMA | 500°C | 0.18*µ*m |
| Example 2 | polycarbonate | 500°C | 0.15*µ*m |
| Example 3 | polycarbonate | 650°C | 0.19*µ*m |
| Comparative Example 1 | - | 500°C | 0.75*µ*m |
| Comparative Example 3 | PMMA | 650°C | 0.48*µ*m |

In Table 1, the surface roughness of the lithium layer is directly influenced by the surface roughness of the lithiation retardation layer. Referring to the result of Table 1, it was confirmed that the arithmetic average roughness (Ra) of the lithium layer was controlled at a low level in the case of examples 1 and 2. This is because when the temperature of the lithium supply unit temperature is 500 °C, the surface can be maintained uniform even if the lithiation retardation layer is made of PMMA (Example 1) or polycarbonate (Example 2).

In the case of the example 3, even if the temperature of the lithium supply unit was 650°C, the arithmetic average roughness of the lithium layer was maintained at a low level. In example 3, polycarbonate was used for the lithiation retardation layer. Polycarbonates can maintain heat resistance at high temperatures, which can maintain excellent surface uniformity. The lithium layer deposited on the lithiation retardation layer having excellent surface uniformity can also maintain a low arithmetic average roughness.

On the other hand, in the case of Comparative Example 1 in which the lithiation retardation layer is not formed, it is confirmed that the arithmetic average roughness of the lithium layer is high. In the case of Comparative Example 3 in which PMMA was applied as the lithiation retardation layer, it can be seen that when the temperature of the lithium supply unit is 650°C, it is out of the heat resistance range of PMMA.

### [Description of reference numerals]

- 110:: current collector
- 120:: negative electrode active material layer
- 130:: lithiation retardation layer
- 140:: lithium layer

## Claims

1. A negative electrode for a lithium secondary battery, the negative electrode comprising:
a negative electrode current collector;
a negative electrode active material layer formed on at least one surface or two surfaces of the negative electrode current collector;
a lithiation retardation layer formed on the negative electrode active material layer; and
a lithium layer formed on the lithiation retardation layer,
wherein in the lithium layer, an average surface roughness of an opposite surface of a surface contacting the lithiation retardation layer is 0.4 µm or less,
wherein the lithiation retardation layer comprises a polymer having at least one of an acrylate repeating unit and a carbonate repeating unit,
wherein a negative electrode active material present in the negative electrode active material layer is a silicon-based negative electrode active material, and
wherein the lithiation retardation layer is soluble in a carbonate-containing electrolyte solution;
wherein the surface roughness denotes the arithmetic average roughness Ra, determined as set out in Experimental Example 4 of the specification.

2. The negative electrode of claim 1, wherein the lithiation retardation layer comprises a polymer having [[a]] the carbonate repeating unit, and
wherein in the lithium layer, an average surface roughness of a surface opposite of the surface contacting the lithiation retardation layer is in a range of 0.05 *µ*m to 0.35 *µ*m.

3. The negative electrode of claim 1, wherein an average thickness of the lithiation retardation layer is in a range of 0.1 *µ*m to 5 *µ*m.

4. The negative electrode of claim 1, wherein an average thickness of the lithium layer is in a range of 0.5 *µ*m to 30 *µ*m.

5. The negative electrode of claim 1, wherein a thickness of the lithiation retardation layer is in a range of 0.5 *µ*m to 1.5 *µ*m, and
wherein a ratio (B/A) of an average thickness (B) of the lithium layer to an average thickness (A) of the lithiation retardation layer is in a range of 3 to 7.

6. A method of manufacturing a negative electrode for a lithium secondary battery as defined in any one of claims 1 to 5, the method comprising:
immersing a negative electrode precursor in a solution containing comprising an amorphous polymer, wherein the negative electrode precursor comprises a negative electrode current collector, a negative electrode active material layer on at least one surface of the negative electrode current collector, and a lithiation retardation layer on the negative electrode active material layer; wherein a negative electrode active material present in a negative electrode active material layer is a silicon-containing negative electrode active material.; and
forming a lithium layer by depositing lithium on the lithiation retardation layer,
wherein during the forming of the lithiation retardation layer, the amorphous polymer comprises at least one of an acrylate repeating unit and a carbonate repeating unit as its repeating unit; and wherein the lithiation retardation layer is soluble in a carbonate-containing electrolyte solution.

7. The method of claim 6, wherein the forming of the lithium layer is performed by thermal evaporation.

8. The method of claim 7, wherein the thermal evaporation is performed in a temperature range of from 460°C to 850°C, based on a temperature of supplied lithium.

## Patentansprüche

1. Negative Elektrode für eine Lithium-Sekundärbatterie, wobei die negative Elektrode umfasst:
einen Negativelektroden-Stromabnehmer;
eine Negativelektroden-Aktivmaterialschicht, gebildet auf zumindest einer Oberfläche oder zwei Oberflächen des Negativelektroden-Stromabnehmers;
eine Lithiierungs-Retardationsschicht, gebildet auf der Negativelektroden-Aktivmaterialschicht; und
eine Lithiumschicht, gebildet auf der Lithiierungs-Retardationsschicht,
worin in der Lithiumschicht die mittlere Oberflächenrauheit einer Oberfläche, die einer Oberfläche gegenüber liegt, die in Kontakt mit der Lithiierungs-Retardationsschicht steht, 0,4 µm oder weniger beträgt,
worin die Lithiierungs-Retardationsschicht ein Polymer umfasst, das zumindest eines von einer Acrylat-Wiederholungseinheit und einer Carbonat-Wiederholungseinheit aufweist,
worin ein Negativelektroden-Aktivmaterial, das in der Negativelektroden-Aktivmaterialschicht vorliegt, ein Negativelektroden-Aktivmaterial auf Siliciumbasis ist, und
worin die Lithiierung-Retardationsschicht in einer carbonathaltigen Elektrolytlösung löslich ist;
worin die Oberflächenrauheit die mittlere Oberflächenrauheit Ra bezeichnet, bestimmt wie im Experimentalbeispiel 4 der Beschreibung ausgeführt.

2. Negative Elektrode gemäß Anspruch 1, worin die Lithiierungs-Retardationsschicht ein Polymer umfasst, das [[a]] die Carbonat-Wiederholungseinheit aufweist, und
worin in der Lithiumschicht die mittlere Oberflächenrauheit einer Oberfläche, die der Oberfläche gegenüber liegt, die in Kontakt mit der Lithiierungs-Retardationsschicht steht, im Bereich von 0,05 µm bis 0,35 µm liegt.

3. Negative Elektrode gemäß Anspruch 1, worin die mittlere Dicke der Lithiierungs-Retardationsschicht im Bereich von 0,1 µm bis 5 µm liegt.

4. Negative Elektrode gemäß Anspruch 1, worin die mittlere Dicke der Lithiumschicht im Bereich von 0,5 µm bis 30 µm liegt.

5. Negative Elektrode gemäß Anspruch 1, worin die Dicke der Lithiierungs-Retardationsschicht im Bereich von 0,5 µm bis 1,5 µm liegt und
worin das Verhältnis (B/A) der mittleren Dicke (B) der Lithiumschicht zur mittleren Dicke (A) der Lithiierungs-Retardationsschicht im Bereich von 3 bis 7 liegt.

6. Verfahren zur Herstellung einer negativen Elektrode für eine Lithium-Sekundärbatterie, wie sie in irgendeinem der Ansprüche 1 bis 5 definiert ist, wobei das Verfahren umfasst:
Eintauchen eines Negativelektroden-Vorläufers in eine Lösung, die ein amorphes Polymer umfasst, worin der Negativelektroden-Vorläufer einen Negativelektroden-Stromabnehmer, eine Negativelektroden-Aktivmaterialschicht auf zumindest einer Oberfläche des Negativelektroden-Stromabnehmers, und eine Lithiierungs-Retardationsschicht auf der Negativelektroden-Aktivmaterialschicht umfasst, worin ein Negativelektroden-Aktivmaterial, das in der Negativelektroden-Aktivmaterialschicht vorliegt, ein siliciumhaltiges Negativelektroden-Aktivmaterial ist; und
Bilden einer Lithiumschicht durch Abscheiden von Lithium auf der Lithiierungs-Retardationsschicht,
worin während der Bildung der Lithiierungs-Retardationsschicht das amorphe Polymer zumindest eines von einer Acrylat-Wiederholungseinheit und einer Carbonat-Wiederholungseinheit als dessen Wiederholungseinheit umfasst, und worin die Lithiierungs-Retardationsschicht in einer carbonathaltigen Elektrolytlösung löslich ist.

7. Verfahren gemäß Anspruch 6, worin das Bilden der Lithiumschicht durch thermische Verdampfung durchgeführt wird.

8. Verfahren gemäß Anspruch 7, worin die thermische Verdampfung in einem Temperaturbereich von 460°C bis 850°C durchgeführt wird, bezogen auf die Temperatur des zugeführten Lithiums.

## Revendications

1. Électrode négative pour une batterie secondaire au lithium, l'électrode négative comprenant :
un collecteur de courant d'électrode négative ;
une couche de matériau actif d'électrode négative formée sur au moins une surface ou deux surfaces du collecteur de courant d'électrode négative ;
une couche de retardement de lithiation formée sur la couche de matériau actif d'électrode négative ; et
une couche de lithium formée sur la couche de retardement de lithiation,
dans laquelle dans la couche de lithium, une rugosité de surface moyenne d'une surface opposée d'une surface en contact avec la couche de retardement de lithiation est de 0,4 µm ou moins,
dans laquelle la couche de retardement de lithiation comprend un polymère présentant au moins un motif de répétition parmi un motif de répétition d'acrylate et un motif de répétition de carbonate,
dans laquelle un matériau actif d'électrode négative présent dans la couche de matériau actif d'électrode négative est un matériau actif d'électrode négative à base de silicium, et
dans laquelle la couche de retardement de lithiation est soluble dans une solution d'électrolyte contenant du carbonate ;
dans laquelle la rugosité de surface désigne la rugosité moyenne arithmétique Ra, déterminée comme indiqué dans l'exemple expérimental 4 de la description.

2. Électrode négative selon la revendication 1, dans laquelle la couche de retardement de lithiation comprend un polymère présentant le motif de répétition de carbonate, et
dans laquelle dans la couche de lithium, une rugosité de surface moyenne d'une surface opposée d'une surface en contact avec la couche de retardement de lithiation est dans une plage allant de 0,05 µm à 0,35 µm.

3. Électrode négative selon la revendication 1, dans laquelle une épaisseur moyenne de la couche de retardement de lithiation est dans une plage allant de 0,1 µm à 5 µm.

4. Électrode négative selon la revendication 1, dans laquelle une épaisseur moyenne de la couche de lithium est dans une plage allant de 0,5 µm à 30 µm.

5. Électrode négative selon la revendication 1, dans laquelle une épaisseur de la couche de lithiation est dans une plage allant de 0,5 µm à 1,5 µm, et
dans laquelle un rapport (B/A) d'une épaisseur moyenne (B) de la couche de lithium sur une épaisseur moyenne (A) de la couche de retardement de lithiation est dans une plage allant de 3 à 7.

6. Procédé de fabrication d'une électrode négative pour une batterie secondaire au lithium telle que définie dans l'une quelconque des revendications 1 à 5, le procédé comprenant :
une immersion d'un précurseur d'électrode négative dans une solution comprenant un polymère amorphe, dans lequel le précurseur d'électrode négative comprend un collecteur de courant d'électrode négative, une couche de matériau actif d'électrode négative sur au moins une surface du collecteur de courant d'électrode négative, et une couche de retardement de lithiation sur la couche de matériau actif d'électrode négative ; dans lequel un matériau actif d'électrode négative présent dans une couche de matériau actif d'électrode négative est un matériau actif d'électrode négative à base de silicium ; et
une formation d'une couche de lithium en déposant du lithium sur la couche de retardement de lithiation,
dans lequel pendant la formation de la couche de retardement de lithiation, le polymère amorphe comprend au moins un motif de répétition parmi un motif de répétition d'acrylate et un motif de répétition de carbonate en tant que son motif de répétition ; et dans lequel la couche de retardement de lithiation est soluble dans une solution d'électrolyte contenant du carbonate.

7. Procédé selon la revendication 6, dans lequel la formation de la couche de lithium est effectuée par évaporation thermique.

8. Procédé selon la revendication 7, dans lequel l'évaporation thermique est effectuée dans une plage de températures allant de 460°C à 850°C, sur la base d'une température de lithium fourni.
